# EUROPÄISCHE PATENTSCHRIFT

(11) **EP 1 154 657 B1**
(45) Veröffentlichungstag und Bekanntmachung des Hinweises auf die Patenterteilung: **15.06.2005**
(21) Anmeldenummer: 01440118.6
(22) Anmeldetag: 23.04.2001
(51) Int. Cl.: H04Q 3/00

(54) **Verfahren zur Lenkung von Diensteaufrufen in einem Telekommunikationsnetz, sowie Telekommunikationsnetz, Vermittlungsstelle und Programmmodul dafür**
Method for guiding service requests in a telecommunications network, as well as a telecommunications network, an exchange and a computer program module adapted thereto
Procédé d'aiguillage de requêtes de services dans un réseau de télécommunication, ainsi qu'un réseau de télécommunication, un commutateur et un module de logiciel adaptés

(30) Priorität: 12.05.2000 DE 10023432
(43) Veröffentlichungstag der Anmeldung: 14.11.2001
(73) Patentinhaber: ALCATEL, 75008 Paris (FR)
(72) Erfinder: Lautenschlager, Wolfgang, 71287 Weissach-Flacht (DE); Felbecker-Janho, Heike, 70825 Korntal-Münchingen (DE); Weik, Hartmut, 70195 Stuttgart (DE)
(74) Vertreter: Rausch, Gabriele, Dr.

(56) Entgegenhaltungen:
- EP-A- 0 886 448
- WO-A-97/36431
- DE-A- 19 515 856
- US-A- 5 903 639

## Beschreibung

Die Erfindung betrifft ein Verfahren zur Lenkung von Diensteaufrufen in einem Telekommunikationsnetz, ein Telekommunikationsnetz nach dem Oberbegriff des Anspruchs 2 hierfür, eine Vermittlungsstelle nach dem Oberbegriff des Anspruchs 3 hierfür und ein Programmmodul hierfür.

Das öffentliche Telekommunikationsnetz (Public Switched Telephone Network, PSTN/ISDN) besteht heute aus den (Teil-)Netzen verschiedener nationaler, regionaler und lokaler Netzbetreiber. Diese Netzbetreiber bieten im zunehmenden Maße über den klassischen Dienst der Herstellung von Kommunikationsverbindungen hinaus zusätzliche Dienste, sogenannte Mehrwertdienste (engl.: added value services) an, beispielsweise die Einrichtung einer sogenannten persönlichen Rufnummer, bei der ein Anruf zeitgesteuert zu einem gewünschten Anschluss des Dienstekunden gelenkt wird. Zur Steuerung und Durchführung dieser Dienste dienen bestimmte Einrichtungen der Netzbetreiber, die in die Infrastruktur des klassischen Telekommunikationsnetzes integriert sind. Am bekanntesten sind dabei solche Einrichtungen, die das sogenannte Intelligente Netz (Intelligent Network, abgekürzt IN) bilden. Die damit ermöglichten Dienste werden auch als IN-Dienste bezeichnet. Die Architektur des Intelligenten Netzes und die Struktur der IN-Dienste sind in entsprechenden ITU-T-Normen festgelegt.

Zwei wesentliche Einrichtungen eines Intelligenten Netzes bilden der sogenannte Service Switching Point SSP und der sogenannte Service Control Point SCP. Der Service Switching Point SSP ist eine digitale Vermittlungsstelle, die den Aufruf eines IN-Dienstes erkennt und dem Service Control Point SCP die Möglichkeit gibt, den Aufruf zu steuern. Eine häufige Möglichkeit, einen bestimmten Dienst des Intelligenten Netzes aufzurufen, besteht darin, eine (IN-)Dienste-Rufnummer zu wählen. Die führende Ziffernfolge der Dienste-Rufnummer bildet dabei die Dienstekennung eines bestimmten IN-Dienstes. Der Service Switching Point SSP erkennt den Aufruf eines IN-Dienstes und informiert den Service Control Point SCP, der die Auflösung der Dienste-Rufnummer vornimmt, d.h. die Bestimmung der physikalischen Adresse jener Einrichtung, mit der der Teilnehmer zur Ausführung des Dienstes verbunden werden muss. Der Dienst läuft dann unter der Kontrolle des Service Control Points SCP ab. Eine ausführliche Beschreibung der Aufgaben des Service Switching Points SSP und des Service Control Points SCP in einem Intelligenten Netz gibt das Buch "Intelligente Netze" von Gerd Sigmund, erschienen 1999 im Hüthig Verlag, Heidelberg (ISBN3-7785-3908-6), auf den Seiten 105-117.

Weiter beschreibt WO 97/36431 ein IN-basiertes Verbindungsaufbauverfahren, bei dem sowohl eine dem rufenden Teilnehmer zugeordnete Dienstvermittlungsstelle als auch eine dem gerufenen Teilnehmer zugeordnete Dienstvermittlungsstelle im Rahmen ein und desselben Verbindungsaufbaus Dienstanforderungsnachrichten an Dienstlogika einer gemeinsamen Dienststeuereinrichtung senden können. Beim Verbindungsaufbau wird eine erste Dienstlogik von der Dienstvermittlungsfunktion der Dienstvennittlungsstelle des gerufenen Teilnehmers getriggert. Während der Erbringung eines Dienstes ist es dieser Dienstlogik möglich, eine "Release Call Message" an die Dienstvermittlungsstelle des gerufenen Teilnehmers zu senden. Das Auftreten dieser Nachricht wird an die Dienstvermitttungsstelle des rufenden Teilnehmers signalisiert. Die Dienstvermittlungsfunktion dieser Dienstvermittlungsstelle initiiert beim Empfang einer derartigen Signalisierung das Senden einer Dienstanforderungsnachricht an die Dienststeuereinrichtung, woraufhin eine zweite Dienstlogik getriggert wird, die im weiteren Dienste für diesen Verbindungsaufbau erbringt.

Die Erfindung ist dabei nicht auf das Intelligente Netz beschränkt, sondern umfasst äquivalente Einrichtungen und Verfahren der Netzbetreiber, mit deren Hilfe Mehrwertdienste angeboten werden können. So bieten die Netzbetreiber heute vielfach bestimmte Dienste außerhalb des Intelligenten Netzes an. Diese Dienste können beispielsweise mit Hilfe zusätzlicher Funktionen in den digitalen Vermittlungsstellen realisiert werden. Da diese Funktionen mit denen des Intelligenten Netzes vergleichbar sind, beschränkt sich die Beschreibung im folgenden auf Ausführungen im Intelligenten Netz.

Während das Intelligente Netz in der Anfangszeit meist landesweit und zentral von einem nationalen Netzbetreiber errichtet und betrieben wurde, werden IN-Dienste zunehmend auch von weiteren Netzbetreibern angeboten. Dazu bauen viele dieser Netzbetreiber eine eigene Netz-Infrastruktur auf. Von einem eigenen Intelligenten Netz eines Netzbetreibers soll im folgenden dann gesprochen werden, wenn der Netzbetreiber in der Lage ist, Diensteaufrufe eigenständig zu erkennen und zu bearbeiten.

Während die Funktionen des Service Switching Points SSP dezentraler Art sind und heute in der Regel in jede Ortvermittlungsstelle integriert sind, sind die Funktionen des Service Control Points von zentraler Art. Dabei muss über die Grenze des jeweiligen Netzbetreibers hinaus jede im nationalen Netz existierende Dienste-Rufnummer soweit aufgelöst werden, dass der Ruf entweder an eine bestimmte physikalische Adresse einer Einrichtung vermittelt werden kann, oder der Netzbetreiber ermittelt werden kann, in dessen Intelligentem Netz der mit der Dienste-Rufnummer verbundenen Dienst durchgeführt wird. Dadurch kann ein Teilnehmer einen Diensteaufruf, unabhängig davon, bei welchem Netzbetreiber der Dienst ausgeführt wird, an jeden beliebigen Netzbetreiber richten. Diese Transparenz der Dienste-Rufnummern in Bezug auf die Netzbetreiber wird auch als Dienste-Rufnummernportabilität (engl.: Service Number Portability, SNP) bezeichnet. Die Dienste-Rufnummern und die damit verbundene Informationen über Adressen und Netzbetreiber sind üblicherweise in leistungsfähigen Datenbanken des Service Control Point SCP gespeichert. Der Service Control Point SCP eines großen Netzbetreibers wird dabei durch eine Anzahl untereinander vernetzter Rechner gebildet, die beispielsweise über ein leistungsfähiges sogenanntes Local Area Network LAN miteinander kommunizieren.

Problematisch ist diese Architektur für kleine, meist lokale Netzbetreiber, die häufig nur das Gebiet einer Stadt abdecken. Für viele dieser Netzbetreiber würde der Betrieb und die Pflege einer Datenbank zu Auflösung aller über die eigenen Dienste-Rufnummern hinausgehenden Dienste-Rufnummern einen unverhältnismäßigen großen Aufwand darstellen. Betreibt ein derartiger Netzbetreiber ein eigenes Intelligentes Netz ohne eine derartige Datenbank, so muss er, um die Dienste-Rufnummernportabilität zu gewährleisten, alle Aufrufe von IN-Diensten zunächst grundsätzlich an einen großen, nationalen Netzbetreiber weitergegeben, der dann die Rufnummernauflösung vornimmt.

Um Diensteaufrufe ohne Umleitung über einen nationalen Netzbetreiber durchführen zu können und ohne dass es der Abfrage in einer derartigen Datenbank bedarf, ist ein Verfahren denkbar, bei dem auf die Dienste-Rufnummernportabilität verzichtet wird und nur Dienste-Rufnummern von solchen IN-Diensten aufgelöst werden, die im Intelligenten Netz des angerufenen lokalen Netzbetreibers erbracht werden können. Andere (IN-) Diensteaufrufe werden nach rückwärts ausgelöst, d.h. diese Aufrufe werden abgebrochen. Der Teilnehmer muss dann einen wiederholten Aufruf des Dienstes an einen anderen, vorzugsweise landesweiten Netzbetreiber richten. Dieses Verfahren ist allerdings wenig benutzerfreundlich und würde die Akzeptanz lokaler IN-Dienste dieser Art vermutlich stark vermindern. Darüber hinaus wird die Dienste-Rufnummernportabilität in vielen Ländern gesetzlich gefordert.

Der Erfindung liegt nun die Aufgabe zugrunde, ein Verfahren und geeignete Mittel zu schaffen, die es insbesondere lokalen Netzbetreibern ermöglichen IN-Dienste ohne den Umweg über einen weiteren Netzbetreiber durchzuführen und ohne dass der lokale Netzbetreiber notwendig Dienste-Rufnummern von IN-Diensten kennen muss, die nicht in seinem Netz erbracht werden.

Diese Aufgabe wird erfindungsgemäß gelöst durch ein Verfahren nach der Lehre des Anspruchs 1, ein Telekommunikationsnetz nach der Lehre des Anspruchs 2, eine Vermittlungsstelle nach der Lehre des Anspruchs 3 und ein Programmmodul nach der Lehre des Anspruchs 4.

Der Grundgedanke der Erfindung ist, dass immer dann, wenn die Auflösung einer Dienste-Rufnummer mit Hilfe der lokalen Datenbank nicht möglich ist, dieser Aufruf an einen weiteren, vorzugsweise nationalen Netzbetreiber übergeben wird. Dabei muss der Netzbetreiber, dem der Aufruf übergeben wird, nicht zwingend der richtige Adressat dieses Dienstes sein. Denkbar wäre es, dass dieser Netzbetreiber ebenfalls keine vollständige Auflösung der Dienste-Rufnummer bewerkstelligt und den Aufruf weiter übergibt.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:
- Fig. 1: zeigt ein Beispiel eines dem Stand der Technik gemäßen Verfahrens in einem Intelligenten Netz für den Fall, dass eine Dienste-Rufnummer aufgelöst werden kann.
- Fig. 2: zeigt ein Beispiel eines dem Stand der Technik gemäßen Verfahrens in einem Intelligenten Netz für den Fall, dass eine Dienste-Rufnummer nicht aufgelöst werden kann.
- Fig. 3: zeigt ein Beispiel eines erfindungsgemäßen Verfahrens in einem Intelligenten Netz für den Fall, dass eine Dienste-Rufnummer nicht aufgelöst werden kann.

Die Auflösung einer Dienste-Rufnummer kann prinzipiell zu einem der folgenden Ergebnisse führen:
a: Die Dienste-Rufnummer kann vollständig aufgelöst werden und es wird die physikalische Adresse der Einheit ermittelt, an die der Teilnehmer zur Erbringung des Dienstes vermittelt werden muss,
b: die Dienste-Rufnummer kann teilweise aufgelöst werden und es wird der Netzbetreiber ermittelt, in dessen Netz der Dienst erbracht wird (Dienste-Rufnummernportabilität) oder
c: die Dienste-Rufnummer kann nicht aufgelöst werden, d.h. sie ist unbekannt.

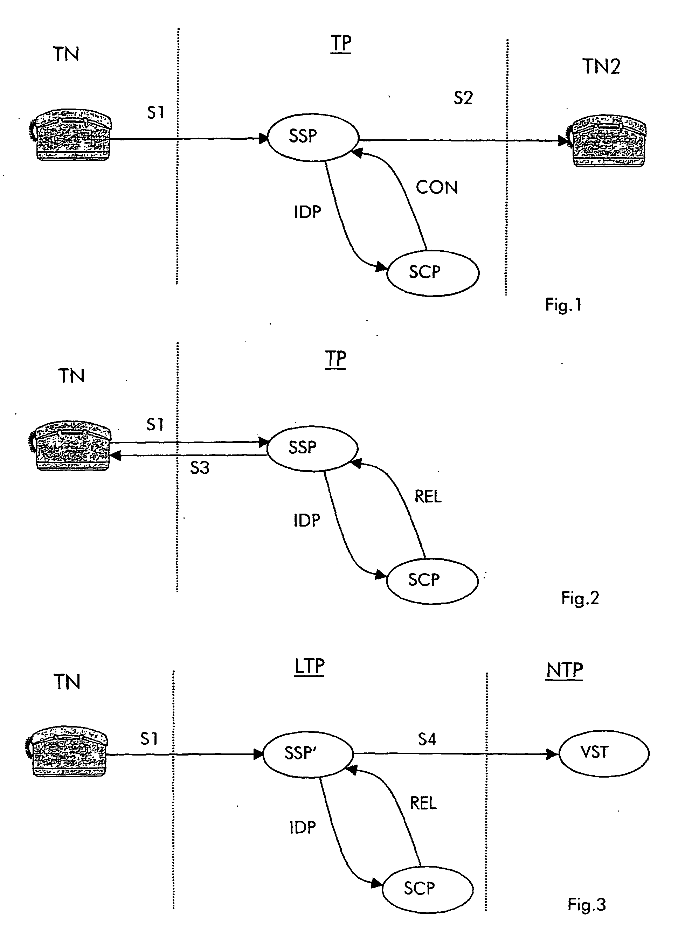

Die Verfahren für Fall a und Fall b ist durch den Stand der Technik zufriedenstellend gelöst. Fall a wird in Fig.1 beispielhaft dargestellt. Fall b wird unter der Erläuterung zu Fig.1 mitbehandelt. Das dem Stand der Technik gemäße Verfahren für den Fall c wird in Fig.2 und anschließend das erfindungsgemäße Verfahren dafür in Fig.3 dargestellt.

Fig.1 zeigt von links nach rechts einen ersten Teilnehmer TN, einen Netzbetreiber TP und einen weiteren Teilnehmer TN2. Als Einheiten des Netzbetreibers TP sind hier ein Service Switching Point SSP und ein Service Control Point SCP eingezeichnet. Vom Teilnehmer TN führt ein Pfeil S1 zum Service Switching Point SSP, von dort führt ein Pfeil IDP zum Service Control Point SCP, von dort führt ein Pfeil CON zurück zum Service Switching Point und von dort führt ein Pfeil S2 zum Teilnehmer TN2. Die Pfeile S1, S2, IDP und CON stellen dabei in Pfeilrichtung übermittelte Nachrichten dar. Der Service Switching Point ist in diesem Beispiel in eine Ortvermittlungsstelle integriert; diese integrierte Einrichtung wird im folgenden als Service Switching Point SSP bezeichnet.

Wenn der Teilnehmer TN einen Dienst des Intelligenten Netzes aufruft, so wählt er eine bestimmte Dienste-Rufnummer, beispielsweise die oben beschriebene einheitliche Rufnummer des Teilnehmers TN2. Diese Dienste-Rufnummer wird mit der Nachricht S1 an den Service Switching Point SSP übergeben. Die Dienste-Rufnummer enthält eine bestimmte Dienstekennung, mit dessen Hilfe der Service Switching Point SSP den Aufruf eines IN-Dienstes erkennt und daraufhin den Service Control Point SCP mit der Nachricht IDP über den Aufruf informiert. Der Service Control Point SCP prüft die Dienste-Rufnummer auf Vollständigkeit und fordert gegebenenfalls zusätzliche Information nach. Anschließend löst der Service Control Point SCP die Dienste-Rufnummer auf, d.h. er ermittelt die physikalische Adresse jener Einrichtung, mit der der Teilnehmer zur Ausführung des Dienstes verbunden werden soll. In diesem Falle soll er einfach mit dem Teilnehmer TN2 verbunden werden, dessen einheitliche Rufnummer nach bestimmten Kriterien auf eine von mehreren möglichen physikalische Adressen (Rufnummer) verweist. Mit der die Rufnummer des Teilnehmers TN2 enthaltenen Nachricht CON wird der Service Switching Point zur Verbindungsherstellung des Teilnehmers TN mit dem Teilnehmer TN2 aufgefordert. Der Service Switching Point SSP sendet daraufhin eine Verbindungsnachricht S2 an den Teilnehmer TN2, der in diesem einfachen Beispiel an den gleichen Service Switching Point SSP angeschlossen ist.

Falls der Service Control Point SCP bei der Auflösung der Dienste-Rufnummer feststellt, dass der aufgerufene Dienst im Intelligenten Netz eines anderen Netzbetreibers ausgeführt werden soll (Fall b), so sendet er diese Information mit der die Adresse des Netzbetreibers enthaltenen Nachricht CON an den Service Switching Point SSP zurück, der den Aufruf daraufhin an eine vereinbarte Vermittlungsstelle dieses Netzbetreibers übergibt. Dort findet dann erneut das im letzten Abschnitt beschriebene Verfahren zur Auflösung der Dienste-Rufnummer statt.

In der folgenden Fig.2 wird ein beispielhaftes Verfahren für den Fall (Fall c) beschrieben, dass die Dienste-Rufnummer im Service Control Point SCP unbekannt ist.

Fig.2 zeigt von links nach rechts den ersten Teilnehmer TN, und den Netzbetreiber TP aus Fig.1. Als Einheiten des Netzbetreibers TP sind hier wieder der Service Switching Point SSP und der Service Control Point SCP eingezeichnet, wobei vom Teilnehmer TN wieder der Pfeil S1 zum Service Switching Point SSP, und von dort der Pfeil IDP zum Service Control Point SCP führt. Anders als in Fig.1 führt statt des Pfeils CON ein Pfeil REL zurück zum Service Switching Point und von dort führt ein Pfeil S3 zurück zum Teilnehmer TN. Die Pfeile S3 und REL stellen dabei analog der aus Fig.1 bekannten Pfeile wiederum in Pfeilrichtung übermittelte Nachrichten dar.

Der Teilnehmer TN wählt wiederum eine bestimmte, mit der Nachricht S1 übermittelte Dienste-Rufnummer, die vom Service Switching Point SSP als Aufruf eines IN-Dienstes erkannt wird, der daraufhin den Service Control Point SCP mit der Nachricht IDP über den Aufruf informiert. In diesem Beispiel soll es sich um eine Dienste-Rufnummer handeln, die der Service Control Point SCP nicht auflösen kann. Dann übergibt er mit der Nachricht REL die Aufforderung zum Auslösen der Verbindung an den Service Switching Point SSP, der anschließend den Teilnehmer TN mit der Nachricht S3 über die Auslösung der Verbindung informiert.

Bei heutigen Intelligenten Netzen darf, wie oben beschrieben, aus Gründen der geforderten Dienste-Rufnummernportabilität eine Dienste-Rufnummer nur dann unbekannt sein, wenn sie tatsächlich nicht existiert, d.h. wenn der Teilnehmer eine ungültige Dienste-Rufnummer gewählt hat. Dazu muss jeder Netzbetreiber, an den eine Diensteaufruf gerichtet wird, dafür sorgen, dass der aufgerufene IN-Dienst dorthin weitergeleitet wird, wo der Dienst erbracht wird. Dies bedeutet z.B. für einen lokalen Netzbetreiber, dessen IN-Dienste nur einen kleinen Teil der gesamten national vorhandenen IN-Dienste ausmachen, dass er den größten Teil der IN-Rufe nach Auflösung der Dienste-Rufnummer weiterleiten muss. Dazu muss er für jede national existierende Dienste-Rufnummer, soweit er sie nicht selber behandelt, mindestens wissen, welchem Netzbetreiber der Diensteaufruf zuzustellen ist. Da ständig neue Nummern hinzukommen und bestehende Nummern geändert oder gelöscht werden, bedeutet es einen hohen Aufwand, eine Datenbank mit derartigen Informationen zu unterhalten. Die einzige Möglichkeit eines lokalen Netzanbieters, diesem Aufwand zu entgehen liegt, wie oben erwähnt, heute darin, grundsätzlich alle Diensteaufrufe zunächst an einen großen nationalen Netzanbieter zu übergeben, der die Auflösung der Dienste-Rufnummer vornimmt und den Diensteaufruf dann, wenn er im Intelligenten Netz des lokalen Netzanbieters erbracht wird, den Diensteaufruf dorthin zurück gibt.

Im folgenden soll anhand von Fig.3 das erfindungsgemäße Verfahren erläutert werden, bei dem Diensteaufrufe direkt im Intelligenten Netz eines beispielsweise lokalen Netzbetreibers behandelt werden können, ohne dass dieser Netzbetreiber Dienste-Rufnummern aufzulösen braucht, die keinen IN-Dienst seines Netzes aufrufen.

Fig.3 zeigt von links nach rechts beispielhaft einen Teilnehmer TN, einen lokalen Netzbetreiber LTP und einen nationalen Netzbetreiber NTP. Als Einheiten des lokalen Netzbetreibers LTP sind hier ein Service Switching Point SSP' und ein Service Control Point SCP eingezeichnet. Als Einheit des landesweiten Netzbetreibers ist eine Vermittlungsstelle VST eingezeichnet. Vom Teilnehmer TN führt, gleich Fig.2, der Pfeil S1 zum Service Switching Point SSP', von dort der Pfeil IDP zum Service Control Point SCP, und von dort der Pfeil REL zurück zum Service Switching Point SSP'. Anders als in Fig.2 führt nun ein ebenfalls eine Nachricht darstellender Pfeil S4 vom Service Switching Point SSP' zur Vermittlungsstelle VST.

Der Service Switching Point SSP' ist gegenüber den in den vorhergehenden Figuren dargestellten Service Switching Point SSP um eine zusätzliche Funktion zur Weiterleitung unbekannter Diensteaufrufe erweitert.

Zunächst läuft das unter Fig.2 beschriebene Verfahren genau gleich ab: Der Teilnehmer TN wählt eine bestimmte Dienste-Rufnummer S1 die vom Service Switching Point SSP' als Aufruf eines IN-Dienstes erkannt wird, welcher daraufhin den Service Control Point SCP mit der Nachricht IDP über den Aufruf informiert. Es soll sich bei diesem Beispiel um einen Diensteaufruf handeln, der nicht im Netz des lokalen Netzbetreibers LTP erbracht wird. Der Service Control Point SCP kennt nur Dienste-Rufnummern von IN-Diensten, die im eigenen Netz des lokalen Netzbetreibers LTP erbracht werden. Bei einer nicht bekannten Dienste-Rufnummer übergibt er, gleich wie in Fig.2 beschrieben, die Nachricht REL an den Service Switching Point SSP' zurück. Anders als in dem unter Fig.2 beschriebenen Verfahren initiiert der Service Switching Point SSP' nun nicht die Auslösung der Verbindung, sondern leitet den Diensteaufruf mit der die Dienste-Rufnummer enthaltenen Nachricht S4 an die Vermittlungsstelle VST des nationalen Netzanbieters NTP weiter. Bei der Vermittlungsstelle des nationalen Netzanbieters NTP kann es sich wiederum um einen Service Switching Point handeln, der das unter Fig.1 beschriebene Verfahren fortsetzt. Es könnten nach diesem Verfahren auch mehrere Netze durchlaufen werden, bevor die Dienste-Rufnummer schließlich in einem Netz aufgelöst werden kann.

Beim Zusammenwirken der Intelligenten Netze verschiedener Netzbetreiber sind grundsätzlich zwei Verfahren denkbar:

Beim ersten Verfahren ist in keinem Netz der Netzbetreiber eine Einrichtung SCP vorhanden, die alle Dienste-Rufnummer auflösen kann. Ein Diensteaufruf wird dann solange weitergeleitet, bis das Netz gefunden wird, in dem die Dienste-Rufnummer aufgelöst werden kann. Je mehr Netzbetreiber mit Intelligentem Netz in einem Telekommunikationsnetz vorhanden sind, desto mehr dieser Netze wird ein Diensteaufruf im Mittel durchlaufen. Damit erhöht sich auch die Wartezeit für den Dienstekunden. Darüber hinaus wird ein Fehler bei der Eingabe einer Dienste-Rufnummer häufig unerkannt bleiben; der Aufruf wird bis zur Auslösung des Aufrufes durch den Teilnehmer oder durch eine netzseitige Überwachungseinrichtung von einem Netzbetreiber zum nächsten Netzbetreiber weitergeleitet. Diese negativen Auswirkungen dieses Verfahrens können dadurch reduziert werden, dass bei jedem Netzbetreiber über die eigenen Dienste-Rufnummern hinaus weitere Dienste-Rufnummern z.B. benachbarter Netzbetreiber bekannt sind.

Beim zweiten Verfahren ist mindestens eine Einrichtung, beispielsweise im Intelligenten Netz eines nationalen Netzbetreibers NTP, vorhanden, die sämtliche national vorhandenen Dienste-Rufnummern auflöst, d.h. für jede Dienste-Rufnummer den Netzbetreiber kennt, in dem der Diensteaufruf bearbeitet wird. Lokale Netzbetreiber LTP lösen, soweit sie ein eigenständiges Intelligentes Netz unterhalten, ihre eigenen Dienste-Rufnummern auf und übergeben die Diensteaufrufe mit nicht aufgelöster Dienste-Rufnummer an den nationalen Netzbetreiber NTP, der die Auflösung dieser Dienste-Rufnummern garantiert.

Das zweite Verfahren erscheint besonders für Länder mit dominierenden nationalen Netzbetreibern vorteilhaft. Da die Vergabe und Verwaltung von Dienste-Rufnummern ohnehin häufig mit Hilfe der Netzeinrichtungen des nationalen Netzbetreibers erfolgt, ermöglicht dieses Verfahren den neu entstandenen lokalen Netzbetreibern, mit geringem Aufwand ein eigenständiges Intelligentes Netz zu betreiben, ohne dass Änderungen in den Netzeinrichtungen der nationalen Netzbetreiber nötig sind.

## Patentansprüche

1. Verfahren zur Lenkung von Diensteaufrufen in einem Telekommunikationsnetz mit einer einen Diensteaufruf erkennenden Vermittlungsstelle (SSP) eines ersten Netzbetreibers (TP) und einer den Diensteaufruf steuernden Steuerungseinrichtung (SCP) des ersten Netzbetreibers (TP), insbesondere im Intelligenten Netz des ersten Netzbetreibers (TP), mit den folgenden Schritten:
- die Vermittlungsstelle (SSP) erkennt einen vom Teilnehmer (TN) ankommenden Ruf als Diensteaufruf und informiert die Steuerungseinrichtung (SCP) des ersten Netzbetreibers (TP) durch Senden einer Information (IDP),
- für den Fall, dass die Steuerungseinrichtung (SCP) des ersten Netzbetreibers (TP) die Dienste-Rufnummer weder bis zu einer physikalischen Adresse auflösen kann, noch einen Netzbetreiber ermitteln kann, in dessen Netz der Dienst erbracht wird, informiert sie die Vermittlungsstelle (SSP) des ersten Netzbetreibers (TP) mit einer Nachricht (REL) und
- die Vermittlungsstelle (SSP) des ersten Netzbetreibers (TP)übergibt den Diensteaufruf an eine Vermittlungsstelle (VST) eines zweiten Netzbetreibers (NTP), die die Bearbeitung des Diensteaufrufes dann fortsetzt.

2. Telekommunikationsnetz mit einer einen Diensteaufruf eines Teilnehmers (TN) erkennenden Vermittlungsstelle (SSP) eines ersten Netzbetreibers (TP) und einer den Diensteaufruf steuernden Steuerungseinrichtung (SCP) des ersten Netzbetreibers (TP), die unter anderem Mittel zur Auflösung einer Dienste-Rufnummer besitzt, **dadurch gekennzeichnet, dass** Weiterleitungsmittel in der Vermittlungsstelle (SSP')des ersten Netzbetreibers (TP)vorhanden sind, die den Diensteaufruf einer nicht in der Steuerungseinrichtung (SCP) des ersten Netzbetreibers (TP)aufgelösten Dienste-Rufnummer zu einer weiteren Vermittlungsstelle (VST) eines zweiten Netzbetreibers (NTP) weiterleiten.

3. Vermittlungsstelle (SSP')eines ersten Netzbetreibers (TP) mit Erkennungsmitteln zum Erkennen von Diensteaufrufen eines Teilnehmers (TN) und Kommunikationsmitteln zum Austauschen von Nachrichten mit einer Steuerungseinheit (SCP) des ersten Netzbetreibers (TP) zum Steuern von Diensteaufrufen **dadurch gekennzeichnet, dass** Weiterleitungsmittel vorhanden sind, die im Falle des Empfangs einer Nachricht (REL) von der Steuerungseinheit (SCP) des ersten Netzbetreibers (TP), dass eine Dienste-Rufnummer nicht aufgelöst werden konnte, die Weiterleitung des Diensteaufrufes an eine Vermittlungsstelle (VST) eines zweiten Netzbetreibers (TP) durchführen.

4. Programmmodul zum Ablauf in einer Vermittlungsstelle (SSP') eines ersten Netzbetreibers (TP), mit den folgenden Schritten:
- Empfang einer Nachricht (REL) von einer Steuereinheit (SCP) des ersten Netzbetreibers (TP), dass eine Dienste-Rufnummer nicht aufgelöst werden konnte und
- Senden einer Nachricht (S4) zur Übermittlung eines Diensteaufrufes an eine Vermittlungsstelle (VST) eines zweiten Netzbetreibers (TP).

## Claims

1. Method for guiding service calls in a telecommunications network with an exchange (SSP) of a first network operator (TP), said exchange recognizing a service call, and a control facility (SCP) of the first network operator (TP), said facility controlling the service call, in particular in the intelligent network of the first network operator (TP), with the following steps:
- the exchange (SSP) recognizes an incoming call from the subscriber (TN) as a service call, and informs the control facility (SCP) of the first network operator (TP) by sending an information message (IDP),
- in the event that the control facility (SCP) of the first network operator (TP) can neither resolve the service number to a physical address nor determine a network operator in whose network the service is performed, it informs the exchange (SSP) of the first network operator (TP) with a message (REL) and
- the exchange (SSP) of the first network operator (TP) passes the service call to an exchange (VST) of a second network operator (NTP), which continues the processing of the service call.

2. Telecommunications network with an exchange (SSP) of a first network operator (TP), said exchange recognizing a service call of a subscriber (TN), and a control facility (SCP) of the first network operator (TP) controlling the service call, said control facility possessing among others means for resolving a service number, **characterized in that** forwarding means are present in the exchange (SSP') of the first network operator (TP), which forward the service call of a service number not resolved in the service facility (SCP) of the first network operator (TP), to a further exchange (VST) of a second network operator (NTP).

3. Exchange (SSP') of a first network operator (TP) with recognition means for recognizing service calls from a subscriber (TN) and communication means for exchanging messages with a control unit (SCP) of the first network operator (TP) for the control of service calls, **characterized in that** forwarding means are present, which in the event of receipt of a message (REL) from the control unit (SCP) of the first network operator (TP) that a service number could not be resolved, execute the forwarding of the service call to an exchange (VST) of a second network operator (TP).

4. Program module for execution in an exchange (SSP') of a first network operator (TP), with the following steps:
- Receipt of a message (REL) from a control unit (SCP) of the first network operator (TP), that a service number could not be resolved and
- Sending of a message (S4) for the transmission of a service call to an exchange (VST) of a second network operator (TP).

## Revendications

1. Procédé pour l'aiguillage d'appels de services dans un réseau de télécommunication avec un commutateur (SSP) reconnaissant un appel de services d'un premier exploitant de réseau (TP) et un dispositif de commande (SCP), commandant l'appel de services, du premier exploitant de réseau (TP), en particulier dans le réseau intelligent du premier exploitant de réseau (TP), avec les étapes suivantes :
- le commutateur (SSP) reconnaît un appel arrivant de l'abonné (TN) comme appel de services et informe le dispositif de commande (SCP) du premier exploitant de réseau (TP) par l'envoi d'une information (IDP),
- dans le cas où le dispositif de commande (SCP) du premier exploitant de réseau (TP) ne peut ni analyser le numéro d'appel de services jusqu'à une adresse physique ni déterminer un exploitant de réseau dans le réseau duquel le service est fourni, il informe le commutateur (SSP) du premier exploitant de réseau (TP) avec un message (REL) et
- le commutateur (SSP) du premier exploitant de réseau (TP) transmet l'appel de services à un commutateur (VST) d'un second exploitant de réseau (NTP) qui poursuit alors le traitement de l'appel de services.

2. Réseau de télécommunication avec un commutateur (SSP), reconnaissant un appel de services d'un abonné (TN), d'un premier exploitant de réseau (TP) et un dispositif de commande (SCP), commandant l'appel de services, du premier exploitant de réseau (TP), qui possède entre autres des moyens pour l'analyse d'un numéro d'appel de services, **caractérisé en ce que** des moyens d'acheminement sont présents dans le commutateur (SSP') du premier exploitant de réseau (TP), qui transmettent l'appel de services d'un numéro d'appel de services non analysé dans le dispositif de commande (SCP) du premier exploitant de réseau (TP) à un autre commutateur (VST) d'un second exploitant de réseau (NTP).

3. Commutateur (SSP') d'un premier exploitant de réseau (TP) comprenant des moyens de reconnaissance pour la reconnaissance d'appels de services d'un abonné (TP) et des moyens de communication pour l'échange de messages avec un dispositif de commande (SCP) du premier exploitant de réseau (TP) pour la commande d'appels de services, **caractérisé en ce que** des moyens d'acheminement sont présents, qui, dans le cas de la réception d'un message (REL) par le dispositif de commande (SCP) du premier exploitant de réseau (TP) mentionnant qu'un numéro d'appel de services n'a pas pu être analysé, effectuent la transmission de l'appel de services à un commutateur (VST) d'un second exploitant de réseau (TP).

4. Module de logiciel pour le déroulement dans un commutateur (SSP') d'un premier exploitant de réseau (TP) comprenant les étapes suivantes :
- réception d'un message (REL) par une unité de commande (SCP) du premier exploitant de réseau (TP) mentionnant qu'un numéro d'appel de services n'a pas pu être analysé et
- envoi d'un message (S4) pour la transmission d'un appel de services à un commutateur (VST) d'un second exploitant de réseau (TP).
